(19) Europäisches Patentamt
European Patent Office
Office européen des brevets

(11) **EP 4 492 495 A1**

(12) **EUROPEAN PATENT APPLICATION**

(43) Date of publication:
**15.01.2025 Bulletin 2025/03**

(21) Application number: **24183425.8**

(22) Date of filing: **20.06.2024**

(51) International Patent Classification (IPC):
*H01M 4/38* (2006.01)       *H01M 4/525* (2010.01)
*H01M 4/587* (2010.01)       *H01M 10/0525* (2010.01)
*H01M 10/0567* (2010.01)       *H01M 10/0568* (2010.01)
*H01M 10/0569* (2010.01)

(52) Cooperative Patent Classification (CPC):
H01M 4/386; H01M 4/525; H01M 4/587;
H01M 10/0525; H01M 10/0567; H01M 10/0568;
H01M 10/0569; H01M 2300/004

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023   KR 20230090557**

(71) Applicant: **SAMSUNG SDI CO., LTD.**
**Giheung-gu**
**Yongin-si, Gyeonggi-do**
**17084 (KR)**

(72) Inventors:
• **Cho, Erang**
  **17084 Yongin-si, Gyeonggi-do (KR)**
• **Seo, Jinah**
  **17084 Yongin-si, Gyeonggi-do (KR)**
• **Lim, Jin-Hyeok**
  **17084 Yongin-si, Gyeonggi-do (KR)**
• **Koh, Sujeong**
  **17084 Yongin-si, Gyeonggi-do (KR)**
• **Kim, Yunhee**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **ELECTROLYTE AND RECHARGEABLE LITHIUM BATTERY INCLUDING THE SAME**

(57)     An electrolyte and a rechargeable lithium battery including the same are provided. The electrolyte includes a non-aqueous organic solvent, a lithium salt, and a lanthanide metal imide salt.

FIG. 1

EP 4 492 495 A1

**Description**

**BACKGROUND**

**1. Field**

One or more embodiments of the present disclosure relate to an electrolyte and a rechargeable lithium battery including the same.

**2. Description of the Related Art**

Recently, with the rapid spread of electronic devices that utilize batteries, such as mobile phones, laptop computers, and electric vehicles, the demand for rechargeable batteries with relatively high energy density and relatively high capacity is rapidly increasing. Accordingly, research and development to improve the performance of rechargeable lithium batteries is actively underway.

A rechargeable lithium battery includes a positive electrode and a negative electrode each including an active material capable of intercalating and deintercalating lithium ions, and an electrolyte, and electrical energy is produced through oxidation and reduction reactions when lithium ions are intercalated/deintercalated to/from the positive electrode and negative electrode.

One of the recent development directions for rechargeable lithium batteries relates to rapid charging. However, when a rechargeable lithium battery is rapidly charged, lithium dendrites may be precipitated on the negative electrode surface (e.g., interface between the negative electrode and the electrolyte), and these dendrites may degrade the life-cycle characteristics of the rechargeable lithium battery and/or may increase resistance.

Accordingly, there is a need or desire for an electrolyte that improves the rapid charging performance of the rechargeable lithium battery, while minimizing or reducing the degradation of life-cycle characteristics and/or the increase of the resistance.

The above information disclosed in this Background section is only for enhancement of understanding of the background of the disclosure and therefore it may contain information that does not constitute prior art.

**SUMMARY**

Aspects of one or more embodiments of the present disclosure relate to an electrolyte that improves rapid charging performance while minimizing or reducing degradation of life-cycle characteristics and/or an increase in resistance.

Aspects of one or more embodiments of the present disclosure relate to a rechargeable lithium battery including the electrolyte.

Aspects of one or more embodiments of the present disclosure relate to an electrolyte including a non-aqueous organic solvent, a lithium salt, and a lanthanide metal imide salt.

Aspects of one or more embodiments of the present disclosure relate to a rechargeable lithium battery including a positive electrode including a positive electrode active material; a negative electrode including a negative electrode active material; and the electrolyte.

In the electrolyte according to aspects of one or more embodiments, by adding a lanthanide metal imide salt, a lithiophilic film can be formed on the surface of the negative electrode, and precipitates at the interface between the negative electrode and the electrolyte can be minimized or reduced.

In a rechargeable lithium battery according to aspects of one or more embodiments, rapid charging performance can be improved while minimizing or reducing deterioration of life-cycle characteristics and/or increase in resistance by applying the electrolyte.

Additional aspects will be set forth in part in the description which follows and, in part, will be apparent from the description, or may be learned by practice of the presented embodiments of the disclosure.

**BRIEF DESCRIPTION OF THE DRAWING**

The accompanying drawing is included to provide a further understanding of the present disclosure and is incorporated in and constitutes a part of this specification. The drawing illustrates example embodiments of the present disclosure and, together with the description, serves to explain principles of present disclosure. In the drawing:

The drawing is a schematic perspective exploded view showing a rechargeable lithium battery according to one or more embodiments of the present disclosure.

## DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Hereinafter, embodiments of the present disclosure will be described in more detail. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, when specific definition is not otherwise provided, it will be understood that when an element, such as an area, layer, film, region or portion, is referred to as being "on," "connected to," or "coupled to" another element, it can be directly on, connected to, or coupled to the other element, or one or more intervening elements may be present. In addition, it will also be understood that when an element is referred to as being "between" two elements, it can be the only element between the two elements, or one or more intervening elements may also be present.

It will be further understood that the terms "comprises," "comprising," "includes," "including," "have," "having," "contain," and "containing," when used in this specification, specify the presence of the stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items.

As used herein, the singular forms "a," "an" and "the" are intended to include the plural forms as well, unless the context clearly indicates otherwise. In addition, unless otherwise specified, "A or B" may mean "including A, including B, or including A and B."

As used herein, "suitable" may refer to an amount, level, combination, *etc.* that is generally available, generally utilized, and/or would be appreciated by one of ordinary skill in the art.

As used herein, "combination thereof" may mean a mixture of constituents, a stack, a composite, a copolymer, an alloy, a blend, and a reaction product.

### Electrolyte

One or more embodiments provide an electrolyte including a non-aqueous organic solvent, a lithium salt, and a lanthanide metal imide salt.

When the lanthanide metal imide salt is added as an additive to the electrolyte, a lithiophilic film can be formed on the surface of the negative electrode and precipitation at the interface between the negative electrode and the electrolyte can be minimized or reduced. This makes it possible to implement a rechargeable lithium battery with improved safety without deteriorating rapid charging performance. This effect and/or aspect of the lanthanide metal imide salt is superior to that of the lanthanide metal nitrate, phosphate salt, and/or the like, and can be confirmed in the evaluation examples described in more detail later.

### Content of Lanthanide Metal Imide Salt

If the content of the lanthanide metal imide salt in 100 wt% of the electrolyte is less than 0.05 wt%, the effect and/or improvement may be minimal, and thus the content of the lanthanide metal imide salt should be controlled or selected to 0.05 wt% or more. In one or more embodiments, the upper limit for the content of the lanthanide metal imide salt in 100 wt% of the electrolyte is not particularly limited, but may be less than or equal to 5.0 wt%, less than or equal to 3.0 wt%, less than or equal to 1.0 wt%, less than or equal to 0.5 wt%, or less than or equal to 0.25 wt%.

For example, the content of the lanthanide metal imide salt in 100 wt% of the electrolyte may be 0.05 to 5.0 wt%, 0.05 to 3.0 wt%, 0.05 to 1.0 wt%, 0.05 to 0.5 wt%, or 0.05 to 0.25 wt%. When the above ranges are satisfied, an appropriate or suitable level of lithiophilic film can be formed on the surface of the negative electrode, and precipitates at the interface between the negative electrode and the electrolyte can be minimized or reduced. As a result, it is possible to implement a rechargeable lithium battery with improved rapid charging performance while suppressing or reducing deterioration of life-cycle characteristics and/or suppressing or reducing an increase in resistance.

### Lanthanide Metals Constituting Lanthanide Metal Imide Salt

The lanthanide metal constituting the lanthanide metal imide salt may be lanthanum (La), cerium (Ce), and/or a (*e.g.*, any suitable) combination thereof.

Desirably, the lanthanide metal imide salt may be LaFSI(Lanthanum;bis(fluorosulfonyl)azanide), lanthanum(III) bis(trifluoromethanesulfonyl)imide (LaTFSI), CeFSI(Cerium;bis(trifluoromethylsulfonyl)azanide), CeTFSI(Cerium;bis(fluorosulfonyl)azanide), and/or a (*e.g.*, any suitable) combination thereof. More desirably, the lanthanide metal imide salt may be LaTFSI or CeTFSI among the four types (kinds) of compounds.

**Non-aqueous Organic Solvent**

In one or more embodiments, the non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (*e.g.*, any suitable) combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethylpropionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyl tetrahydrofuran, tetrahydrofuran, and/or the like. The ketone-based solvent may include cyclohexanone and/or the like. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and/or the like.

The non-aqueous organic solvent may be utilized alone or in combination of two or more.

Additionally, if utilizing a carbonate-based solvent, a cyclic carbonate and a chain carbonate may be mixed and utilized, and the cyclic carbonate and the chain carbonate may be mixed at a volume ratio of 1:1 to 1:9.

In one or more embodiments, ethylene carbonate (EC) may be utilized as the cyclic carbonate, and ethyl methyl carbonate (EMC) and dimethyl carbonate (DMC) may be utilized as the chain carbonate.

In one or more embodiments, the non-aqueous organic solvent can be mixed and utilized in a volume ratio of EC:EMC:DMC = 1:0.5:0.5 to 1:4.5:4.5 to achieve excellent or suitable electrolyte performance.

**Lithium Salt**

The lithium salt dissolved in the organic solvent supplies lithium ions in a battery, enables a basic operation of a rechargeable lithium battery, and improves transportation of the lithium ions between positive and negative electrodes. Examples of the lithium salt may include one or more selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide (LiFSI)), $LiC_4F_9SO_3$, $LiC_4F_9SO_3$, $LiN(C_xF_{2x+1}SO_2)(C_yF_{2y+1}SO_2)$, x and y are integers of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

**Other additives**

The electrolyte may further include a carbonate-based additive, a sultone-based additive, a nitrile-based additive, a lithium salt-based additive, and/or a (*e.g.*, any suitable) combination thereof to improve a battery's life-cycle.

The carbonate-based additive may include vinylene carbonate or an ethylene carbonate-based compound.

Examples of the ethylene carbonate-based compound may include fluoroethylene carbonate, difluoroethylene carbonate, vinylethylene carbonate, chloroethylene carbonate, dichloroethylene carbonate, bromoethylene carbonate, dibromoethylene carbonate, nitroethylene carbonate, cyanoethylene carbonate, and/or the like.

The nitrile-based additive may include a dinitrile-based compound, a polynitrile-based compound, and/or a (*e.g.*, any suitable) combination thereof.

Examples of the dinitrile-based compounds may include succinonitrile (SN), glutaronitrile, adiponitrile (AN), pimelonitrile, octandinitrile, nonandinitrile, caprylnitrile, ethylene glycol (bispropionitrile) ether (nitrile ether), fumaronitrile, and/or the like.

Examples of the polynitrile-based compounds may include 1, 3, 6-hexanetrinitrile (HTCN), 1, 2, 6-hexanetrinitrile, 1, 3, 5-pentanetrinitrile, nonantrinitrile, 1, 3, 5-benzotrinitrile, 2, 4, 6-trifluorobenzene-1, 3,5-trinitrile, 1, 3, 5-cyclohexanetrinitrile, 1, 2, 3-propionitrile, 1, 3, 5-benztricyano, 1, 2, 3-tris(2-cyanoxy) propane, and/or the like.

The sultone-based additive may include propene sultone (PST), propane sultone (PS), and/or the like.; and the lithium salt-based additive may include lithium tetrafluoroborate ($LiBF_4$), lithium difluorophosphate ($LiPO_2F_2$), lithium difluoro(fluoromalonato)borate (LFMB), and/or the like.

**Rechargeable Lithium Battery**

one or more embodiments provide a rechargeable lithium battery including a positive electrode including a positive electrode active material; a negative electrode including a negative electrode active material; and the electrolyte.

By applying the electrolyte, rapid charging performance can be improved while minimizing or reducing deterioration of life-cycle characteristics and/or minimizing or reducing an increase in resistance.

Hereinafter, redundant descriptions of the electrolyte may not be provided and the rechargeable lithium battery will be described in more detail.

**Positive Electrode Active Material**

The positive electrode active material may be a compound (lithiated intercalation compound) capable of intercalating and deintercalating lithium. Desirably, one or more types (kinds) of composite oxides of lithium and a metal selected from among cobalt, manganese, nickel, and/or a (*e.g.*, any suitable) combination thereof may be utilized.

The composite oxide may be a lithium transition metal composite oxide, and examples may include lithium nickel-based oxide, lithium cobalt-based oxide, lithium manganese-based oxide, a lithium iron phosphate-based compound, cobalt-free lithium nickel-manganese-based oxide, and/or a (*e.g.*, any suitable) combination thereof.

As an example, a compound represented by any of the following chemical formulas may be utilized. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-e}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); $Li_aFePO_4$ ($0.90 \leq a \leq 1.8$).

In the above chemical formulas, A is Ni, Co, Mn, and/or a (*e.g.*, any suitable) combination thereof; X is Al, Ni, Co, Mn, Cr, Fe, Mg, Sr, V, a rare earth element, and/or a (*e.g.*, any suitable) combination thereof; D is O, F, S, P, and/or a (*e.g.*, any suitable) combination thereof; G is Al, Cr, Mn, Fe, Mg, La, Ce, Sr, V, and/or a (*e.g.*, any suitable) combination thereof; and $L^1$ is Mn, Al, and/or a (*e.g.*, any suitable) combination thereof.

As an example, the positive electrode active material may have a nickel content of greater than or equal to 80 mol%, greater than or equal to 85 mol%, greater than or equal to 90 mol%, greater than or equal to 91 mol%, or greater than or equal to 94 mol% based on 100 mol% of metals excluding lithium in the lithium transition metal composite oxide And, in one or more embodiments, may be a high nickel-based positive electrode active material with a nickel content of less than or equal to 99 mol%. The high-nickel-based positive electrode active materials can achieve relatively high capacity and can be applied to relatively high-capacity, relatively high-density rechargeable lithium batteries.

Desirably, the positive electrode active material may include one or more compounds represented by Chemical Formula 1.

Chemical Formula 1 $\quad\quad\quad Li_xM^1_yM^2_zM^3_{1-y-z}O_2$

In Chemical Formula 1, $0.5 \leq x \leq 1.8$; $0 < y \leq 1$; $0 \leq z \leq 1$; $0 \leq y+z \leq 1$; $M^1$, $M^2$, and $M^3$ may each independently be selected from among metals such as Ni, Co, Mn, Al, Sr, Mg or La, and a (e.g., any suitable) combination thereof.

More desirably, $M^1$ and $M^2$ may each independently be Ni or Co, and $M^3$ may be a metal such as Co, Mn, Al, Sr, Mg, or La. Even more desirably, $M^1$ and $M^2$ may each independently be Ni or Co, and $M^3$ may be Mn or Al.

In one or more embodiments, x may satisfy $1 \leq x \leq 1.2$. Additionally, y may satisfy $0.5 \leq y < 1$, $0.6 \leq y < 1$, or $0.7 \leq y < 1$. In one or more embodiments, z may satisfy $0 < z \leq 0.5$, $0 < z \leq 0.3$, or $0 < z \leq 0.2$.

For example, $M^1$ and $M^2$ may be Ni and Co, respectively, $M^3$ may be Mn or Al, and $1 \leq x \leq 1.2$, $0.7 \leq y < 1$, and $0 < z \leq 0.3$. For example, the positive electrode active material may be a high-nickel (high-Ni)-based NCM compound or an NCA compound.

When the positive electrode active material is a high-nickel (High-Ni)-based NCM compound or NCA compound, it may be a compound represented by Chemical Formula 1-1 or 1-2.

Chemical Formula 1-1 $\quad\quad\quad Li_{x1}Ni_{y1}Co_{z1}Al_{1-y1-z1}O_2$

In Chemical Formula 1-1, $1 \leq x1 \leq 1.2$; $0.7 \leq y1 \leq 1$; $0 \leq z1 \leq 0.3$; and $0.7 \leq y1+z1 \leq 1$; and

Chemical Formula 1-2 $Li_{x2}Ni_{y2}Co_{z2}Mn_{1-y2-z2}O_2$

wherein, in Chemical Formula 1-2, $1 \leq x1 \leq 1.2$; $0.7 \leq y2 \leq 1$; $0 \leq z2 \leq 0.3$; and $0.7 \leq y2 \; z2 \leq 1$.

**Positive Electrode**

The positive electrode for a rechargeable lithium battery may include a current collector and a positive electrode active material layer on the current collector. The positive electrode active material layer may include a positive electrode active material and may further include a binder and/or a conductive material.

For example, the positive electrode may further include an additive that can function as a sacrificial positive electrode.

A content of the positive electrode active material may be 90 wt% to 99.5 wt%, and a content of the binder and the conductive material may each be 0.5 wt% to 5 wt%, respectively, based on 100 wt% of the positive electrode active material layer.

The binder serves to attach or secure the positive electrode active material particles to each other and also to attach the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be utilized to impart conductivity (e.g., electrical conductivity) to the electrode. Any material that does not cause chemical change (e.g., does not cause an undesirable chemical change in the rechargeable lithium battery) and conducts electrons can be utilized as the conductive material in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, and/or the like, in a form of a metal powder or a metal fiber; a conductive polymer such as a polyphenylene derivative; and/or a (e.g., any suitable) mixture thereof.

Al may be utilized as the current collector, but the present disclosure is not limited thereto.

**Negative Electrode Active Material**

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon and/or a (e.g., any suitable) combination thereof. The crystalline carbon may be graphite such as non-shaped, sheet-shaped (e.g., in the shape of sheets), flake-shaped (e.g., in the shape of flakes), sphere-shaped (e.g., in the shape of spheres), or fiber-shaped (e.g., in the shape of fibers) natural graphite or artificial graphite. The amorphous carbon may be a soft carbon, a hard carbon, a mesophase pitch carbonization product, calcined coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_x$ ($0 < x \leq 2$) (e.g., $SnO_2$), a Sn-based alloy, and/or a (e.g., any suitable) combination thereof.

The silicon-carbon composite may be a composite of silicon and amorphous carbon. According to one or more embodiments, the silicon-carbon composite may be in the form of silicon particles and amorphous carbon coated on the surface of the silicon particles. For example, the silicon-carbon composite may include a secondary particle (core) in which primary silicon particles are assembled (e.g., agglomerated), and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be utilized in combination with a carbon-based negative electrode active material.

## Negative Electrode

A negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include 90 wt% to 99 wt% of the negative electrode active material, 0.5 wt% to 5 wt% of the binder, and 0.5 wt% to 5 wt% of the conductive material.

The binder may serve to attach the negative electrode active material particles to each other and also to attach the negative electrode active material to the current collector. The binder may include a non-aqueous binder, an aqueous binder, a dry binder, and/or a (*e.g.*, any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (*e.g.*, any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and/or a (*e.g.*, any suitable) combination thereof.

When an aqueous binder is utilized as the negative electrode binder, it may further include a cellulose-based compound capable of imparting viscosity. The cellulose-based compound includes one or more of carboxyl methyl cellulose, hydroxypropyl methyl cellulose, methyl cellulose, or alkali metal salts thereof. The alkali metal may be Na, K, or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, and/or a (*e.g.*, any suitable) combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in the form of a metal powder or a metal fiber; a conductive polymer such as a polyphenylene derivative; and/or a (*e.g.*, any suitable) mixture thereof.

The negative electrode current collector may include one selected from among a copper foil, a nickel foil, a stainless steel foil, a titanium foil, a nickel foam, a copper foam, a polymer substrate coated with a conductive metal, and/or a (*e.g.*, any suitable) combination thereof, but the present disclosure is not limited thereto.

## Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and/or a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, and/or a (*e.g.*, any suitable) combination thereof on a surface (*e.g.*, one or both surfaces or sides (*e.g.*, opposite surfaces)) of the porous substrate.

The porous substrate may be a polymer film formed of any one or more polymers selected from among polyolefin such as polyethylene and/or polypropylene, polyester such as polyethylene terephthalate and/or polybutylene terephthalate, polyacetal, polyamide, polyimide, polycarbonate, polyether ketone, polyaryl ether ketone, polyether ketone, polyetherimide, polyamideimide, polybenzimidazole, polyether sulfone, polyphenylene oxide, a cyclic olefin copolymer, polyphenylene sulfide, polyethylene naphthalate, a glass fiber, and/or polytetrafluoroethylene (PTFE, *e.g.*, TEFLON), or a copolymer or (*e.g.*, any suitable) mixture of two or more thereof.

The organic material may include a polyvinylidene fluoride-based polymer or a (meth)acrylic-based polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and/or a (*e.g.*, any suitable) combination thereof, but the present disclosure is not limited thereto.

The organic material and the inorganic material may be mixed in one coating layer, or a coating layer including an organic material and a coating layer including an inorganic material may be stacked.

**Rechargeable Lithium Battery**

The rechargeable lithium battery may be classified into cylindrical, prismatic, pouch, or coin-type or kind batteries, and/or the like depending on their shape. The drawing shows a schematic view of a cylindrical rechargeable lithium battery according to one or more embodiments of the present disclosure. Referring to the drawing, a rechargeable lithium battery 100 may include an electrode assembly including a separator 30 between a positive electrode 10 and a negative electrode 20, and a case 50 in which the electrode assembly is included. The positive electrode 10, the negative electrode 20, and the separator 30 may be impregnated with an electrolyte and a sealing member 60 that seals the case 50 may be included.

The rechargeable lithium battery according to one or more embodiments may be applied to automobiles, mobile phones, and/or one or more suitable types (kinds) of electrical devices, but the present disclosure is not limited thereto.

Hereinafter, examples of the present disclosure and comparative examples are described. These examples, however, are not in any sense to be interpreted as limiting the scope of the present disclosure.

**Preparation of Electrolyte for Rechargeable Lithium Battery**

**Preparation Example 1**

As a non-aqueous organic solvent, a carbonate-based solvent prepared by mixing ethylene carbonate (EC): ethyl methyl carbonate (EMC): dimethyl carbonate (DMC) in a volume ratio of 20:40:40 was utilized.

To the non-aqueous organic solvent, 1.5 M of a lithium salt ($LiPF_6$) was added, and 0.05 wt% of a lanthanide metal imide salt (lanthanum(III) bis(trifluoromethanesulfonyl)imide (LaTFSI)), 1.5 wt% of vinylene carbonate (VC), and 0.5 wt% of vinyl ethylene carbonate (VEC) were added as an additive thereto to obtain an electrolyte for a rechargeable lithium battery.

Herein, a content (wt%) of the lanthanide metal imide salt indicates a content of the lanthanide metal imide salt (wt%) based on 100 wt% of the electrolyte for a rechargeable lithium battery. Hereinafter, the above will be equally applied.

**Preparation Example 2**

An electrolyte for a rechargeable lithium battery was prepared in substantially the same manner as in Preparation Example 1 except that 0.1 wt% of a lanthanide metal imide salt (LaTFSI) was utilized as the additive.

**Preparation Example 3**

An electrolyte for a rechargeable lithium battery was prepared in substantially the same manner as in Preparation Example 1 except that 0.25 wt% of a lanthanide metal imide salt (LaTFSI) was utilized as the additive.

**Preparation Example 4**

An electrolyte for a rechargeable lithium battery was prepared in substantially the same manner as in Preparation Example 1 except that 0.5 wt% of a lanthanide metal imide salt (LaTFSI) was utilized as the additive.

**Preparation Example 5**

An electrolyte for a rechargeable lithium battery was prepared in substantially the same manner as in Preparation Example 1 except that 1.0 wt% of a lanthanide metal imide salt (LaTFSI) was utilized as the additive.

**Preparation Example 6**

An electrolyte for a rechargeable lithium battery was prepared in substantially the same manner as in Preparation Example 1 except that 5.0 wt% of a lanthanide metal imide salt (LaTFSI) was utilized as the additive.

**Preparation Example 7**

An electrolyte for a rechargeable lithium battery was prepared in substantially the same manner as in Preparation Example 1 except that 0.25 wt% of a lanthanide metal imide salt (LaTFSI) was utilized as the additive.

**Preparation Example 8**

An electrolyte for a rechargeable lithium battery was prepared in substantially the same manner as in Preparation Example 1 except that 0.25 wt% of a lanthanide metal imide salt (CeTFSI) was utilized as the additive.

**Comparative Preparation Example 1**

An electrolyte for a rechargeable lithium battery was prepared in substantially the same manner as in Preparation Example 1 except that no additives were added.

**Comparative Preparation Example 2**

An electrolyte for a rechargeable lithium battery was prepared in substantially the same manner as in Preparation Example 1 except that 0.25 wt% of lanthanide metal nitrate (La(NOs)s) was utilized as the additive.

**Comparative Preparation Example 3**

An electrolyte for a rechargeable lithium battery was prepared in substantially the same manner as in Preparation Example 1 except that 0.25 wt% of a lanthanide metal phosphate salt (LaPF$_6$) was utilized as the additive.

**Comparative Preparation Example 4**

An electrolyte for a rechargeable lithium battery was prepared in substantially the same manner as in Preparation Example 1 except that 1.0 M LiPF$_6$ and 0.5 M lanthanide metal imide salt (LaTFSI) were utilized instead of 1.5 M lithium salt (LiPF$_6$), and no other additives were utilized.

**Production of Rechargeable Lithium Battery Cells**

**Example 1**

LiNi$_{0.88}$Co$_{0.07}$Al$_{0.05}$O$_2$ as a positive electrode active material, polyvinylidene fluoride as a binder, and ketjen black as a conductive material were mixed in a weight ratio of 97:2:1, and then dispersed in N-methyl pyrrolidone to prepare a positive electrode active material slurry.

The positive electrode active material slurry was coated on a 14 $\mu$m-thick Al foil, dried at 110 °C, and pressed to manufacture a positive electrode.

A mixture of artificial graphite and Si-C composite in a weight ratio of 93:7 was prepared as a negative electrode active material, and the negative electrode active material, a styrene-butadiene rubber, and carboxyl methyl cellulose in a weight ratio of 97:1:2 were dispersed in distilled water to prepare negative electrode active material slurry.

The Si-C composite included a core including artificial graphite and silicon particles and coal pitch coated on the surface of the core.

The negative electrode active material slurry was coated on a 10 $\mu$m-thick Cu foil, dried at 100 °C, and pressed to manufacture a negative electrode.

The manufactured positive and negative electrodes and a polyethylene separator having a thickness of 25 $\mu$m were assembled to manufacture an electrode assembly, and the electrolyte for a rechargeable lithium battery of Preparation Example 1 was injected to prepare a rechargeable lithium battery cell.

**Example 2**

A rechargeable lithium battery cell was manufactured in substantially the same manner as in Example 1, except that the electrolyte for a rechargeable lithium battery according to Preparation Example 2 was injected.

**Example 3**

A rechargeable lithium battery cell was manufactured in substantially the same manner as in Example 1, except that the electrolyte for a rechargeable lithium battery according to Preparation Example 3 was injected.

**Example 4**

A rechargeable lithium battery cell was manufactured in substantially the same manner as in Example 1, except that the electrolyte for a rechargeable lithium battery according to Preparation Example 4 was injected.

**Example 5**

A rechargeable lithium battery cell was manufactured in substantially the same manner as in Example 1, except that the electrolyte for a rechargeable lithium battery according to Preparation Example 5 was injected.

**Example 6**

A rechargeable lithium battery cell was manufactured in substantially the same manner as in Example 1, except that the electrolyte for a rechargeable lithium battery according to Preparation Example 6 was injected.

**Example 7**

A rechargeable lithium battery cell was manufactured in substantially the same manner as in Example 1, except that the electrolyte for a rechargeable lithium battery according to Preparation Example 7 was injected.

**Example 8**

A rechargeable lithium battery cell was manufactured in substantially the same manner as in Example 1, except that the electrolyte for a rechargeable lithium battery according to Preparation Example 8 was injected.

**Comparative Example 1**

A rechargeable lithium battery cell was manufactured in substantially the same manner as in Example 1, except that the electrolyte for a rechargeable lithium battery according to Comparative Preparation Example 1 was injected.

**Comparative Example 2**

A rechargeable lithium battery cell was manufactured in substantially the same manner as in Example 1, except that the electrolyte for a rechargeable lithium battery according to Comparative Preparation Example 2 was injected.

**Comparative Example 3**

A rechargeable lithium battery cell was manufactured in substantially the same manner as in Example 1, except that the electrolyte for a rechargeable lithium battery according to Comparative Preparation Example 3 was injected.

**Comparative Example 4**

A rechargeable lithium battery cell was manufactured in substantially the same manner as in Example 1, except that the electrolyte for a rechargeable lithium battery according to Comparative Preparation Example 4 was injected.

**Evaluation Examples**

**Evaluation 1: Precipitates at Interface Between Negative Electrode and Electrolyte**

Each of the rechargeable lithium battery cells according to Examples 1 to 8 and Comparative Examples 1 to 4 was constant current (CC) charged at 1 C to a state-of-charge (SOC) of 80% and discharged at 0.1 C and then measured with respect to a lithium dendrite precipitation amount according to Equation 1, and the results are shown in Table 1.

Lithium dendrite precipitation amount % = 100 * amount of lithium dendrite after discharge under the above conditions / lithium charge amount at SOC 100% fully charged

equation 1

Table 1

|  | Lithium dendrite precipitation amount [%] |
|---|---|
| Comparative Example 1 | 1.53 |
| Comparative Example 2 | 1.50 |
| Comparative Example 3 | 1.49 |
| Comparative Example 4 | 2.8 |
| Example 1 | 1.32 |
| Example 2 | 1.23 |
| Example 3 | 1.18 |
| Example 4 | 1.22 |
| Example 5 | 1.25 |
| Example 6 | 1.30 |
| Example 7 | 1.17 |
| Example 8 | 1.21 |

Referring to Table 1, Examples 1 to 8, compared with Comparative Examples 1 to 4, had suppressed or reduced the lithium dendrite precipitation on the interface of the negative electrode with the electrolyte.

**Evaluation 2: Capacity retention rate and DC-IR increase rate during rapid charging**

Each of the rechargeable lithium battery cells according to Examples 1 to 8 and Comparative Examples 1 to 4 were measured with respect to life-cycle characteristics (capacity retention after 300 rapid charging cycles) and a DC internal resistance (DC-IR) increase rate, and the results are shown in Table 2.

The rechargeable lithium battery cells were rapidly constant current-charged once to a voltage of 4.2 V at a rate in a range of 2.0 C to 3.0 C, and then discharged to a voltage of 2.8 V at a rate of 0.5 C at 25 °C. This cycle was repeated 300 times with a 10 minutes pause after each cycle.

After repeating the 300 cycles, the cells were evaluated with respect to the capacity retention according to Equation 2, and also with respect to the DC-IR increase rate according to Equation 3:

Capacity retention rate (%) = [Discharge capacity in 300th cycle / Discharge capacity in 1st cycle] $\times$ 100       equation 2

Equation 3

DC-IR increase rate = DC-IR (300th charge/discharge cycle)/DC-IR (0d.)

In Equation 3, DC-IR (300th charge/discharge cycle) indicates DC-IR after the 300th charge/discharge cycle at 25°C, and DC-IR (0d.) indicates DC-IR before the 300 charges and discharges.

Table 2

|  | Capacity retention rate [%, @25 °C] | DC-IR increase rate [%, @25 °C] |
|---|---|---|
| Comparative Example 1 | 80.1 | 13.1 |
| Comparative Example 2 | 79.1 | 11.9 |
| Comparative Example 3 | 78.9 | 12.5 |
| Comparative Example 4 | 65.1 | 30.8 |
| Example 1 | 83.2 | 10.8 |

(continued)

|  | Capacity retention rate [%, @25 °C] | DC-IR increase rate [%, @25 °C] |
|---|---|---|
| Example 2 | 84.3 | 6.5 |
| Example 3 | 84.4 | 7.3 |
| Example 4 | 83.8 | 7.7 |
| Example 5 | 83.6 | 7.9 |
| Example 6 | 83.5 | 8.6 |
| Example 7 | 83.6 | 8.5 |
| Example 8 | 83.8 | 8.0 |

Referring to Table 2, Examples 1 to 8, compared with Comparative Examples 1 to 4, had a suppressed or reduced resistance increase during the rapid charging, which confirmed that a rapid charging life-cycle thereof was improved.

**Evaluation 3: Rapid Charging Time**

The rechargeable lithium battery cells of Examples 1 to 8 and Comparative Examples 1 to 4 were evaluated with rapid charging time under the following conditions, and the results are shown in Table 3.
The rapid charging time was obtained by measuring time taken to fully charge each cell to 4.2 V (SOC 100%) or reach SOC 80%, when CC charged with a current of 1 C at 25 °C.

Table 3

|  | Time to reach SOC 80% | Time to reach SOC 100% |
|---|---|---|
|  | [min, @25 °C] | [min, @25 °C] |
| Comparative Example 1 | 40.1 | 57.0 |
| Comparative Example 2 | 40.4 | 57.3 |
| Comparative Example 3 | 41.1 | 57.5 |
| Comparative Example 4 | 50.6 | 60.5 |
| Example 1 | 38.3 | 56.1 |
| Example 2 | 36.6 | 55.2 |
| Example 3 | 36.8 | 55.4 |
| Example 4 | 37.1 | 55.7 |
| Example 5 | 37.7 | 55.9 |
| Example 6 | 38.0 | 56.0 |
| Example 7 | 38.1 | 56.0 |
| Example 8 | 36.5 | 55.2 |

Considering Tables 1 and 3 comprehensively, Examples 1 to 8, compared with Comparative Examples 1 to 4, each had suppressed or reduced lithium dendrite precipitation on the interface of the negative electrode with the electrolyte, which should have positively contributed to the improvement in rapid charging.
Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.
Further, the use of "may" when describing embodiments of the present disclosure refers to "one or more embodiments of the present disclosure."
Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

**Reference Numerals**

| 100: | rechargeable lithium battery |
|---|---|
| 10: | positive electrode |
| 20: | negative electrode |
| 30: | separator |
| 50: | case |
| 60: | sealing member |

**Claims**

1. An electrolyte comprising:

   a non-aqueous organic solvent;
   a lithium salt; and
   a lanthanide metal imide salt.

2. The electrolyte of claim 1, wherein an amount of the lanthanide metal imide salt is 0.05 to 5 wt% based on 100 wt% of the electrolyte.

3. The electrolyte of claim 2, wherein an amount of the lanthanide metal imide salt is 0.05 to 0.25 wt% based on 100 wt% of the electrolyte.

4. The electrolyte of any one of the preceding claims, wherein the lanthanide metal of the lanthanide metal imide salt is lanthanum (La), cerium (Ce), or a combination thereof.

5. The electrolyte of any one of claims 1 to 3, wherein the lanthanide metal imide salt is LaFSI, lanthanum (III) bis(trifluoromethanesulfonyl)imide (LaTFSI), CeFSI, CeTFSI, or a combination thereof.

6. The electrolyte of any one of the preceding claims, wherein the non-aqueous organic solvent comprises a carbonate-based solvent, an ester-based solvent, an ether-based solvent, a ketone-based solvent, an alcohol-based solvent, and/or an aprotic solvent.

7. The electrolyte of claim 6, wherein the non-aqueous organic solvent comprises the carbonate-based solvent in which a cyclic carbonate and a chain carbonate are mixed in a volume ratio of 1:1 to 1:9.

8. The electrolyte of claim 7, wherein

   the cyclic carbonate comprises ethylene carbonate (EC), and
   the chain carbonate comprises ethyl methyl carbonate (EMC) and dimethyl carbonate (DMC).

9. The electrolyte of any one of the preceding claims, wherein the lithium salt comprises one or more selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide (LiFSI), $LiC_4F_9SO_3$, $LiC_4F_9SO_3$, $LiN(C_xF_{2x+1}SO_2)(C_yF_{2y+1}SO_2)$, wherein x and y are integers of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

10. The electrolyte of claim 9, wherein a concentration of the lithium salt in the electrolyte is 1.0 M to 2.0 M.

11. A rechargeable lithium battery (100), comprising:

a positive electrode (10) comprising a positive electrode active material;
a negative electrode (20) comprising a negative electrode active material; and
the electrolyte according to claim 1.

12. The rechargeable lithium battery (100) of claim 11, wherein the positive electrode active material comprises one or more compounds represented by Chemical Formula 1:

Chemical Formula 1 $\quad$ $Li_xM^1_yM^2_zM^3_{1-y-z}O_2$

wherein, in Chemical Formula 1, $0.5 \leq x \leq 1.8$; $0 \leq y \leq 1$; $0 \leq z \leq 1$; $0 \leq y+z \leq 1$; and $M^1$, $M^2$, and $M^3$ are each independently selected from among metals selected from among Ni, Co, Mn, Al, Sr, Mg, La, and combinations thereof.

13. The rechargeable lithium battery (100) of claim 12, wherein the positive electrode active material is a compound represented by Chemical Formula 1-1 or Formula 1-2:

Chemical Formula 1-1 $\quad$ $Li_{x1}Ni_{y1}Co_{z1}Al_{1-y1-z1}O_2$,

in Chemical Formula 1-1, $1 \leq x1 \leq 1.2$; $0.7 \leq y1 \leq 1$; $0 \leq z1 \leq 0.3$; and $0.7 \leq y1+z1 \leq 1$; and

Chemical Formula 5-2 $\quad$ $Li_{x2}Ni_{y2}Co_{z2}Mn_{1-y2-z2}O_2$,

in Chemical Formula 1-2, $1 \leq x1 \leq 1.2$; $0.7 \leq y2 \leq 1$; $0 \leq z2 \leq 0.3$; and $0.7 \leq y2\ z2 \leq 1$.

14. The rechargeable lithium battery (100) of claim 11, wherein the negative electrode active material comprises a Si-based negative electrode active material.

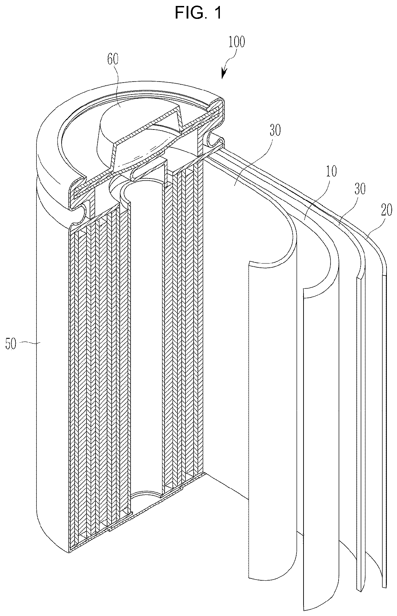

FIG. 1

Europäisches
Patentamt

European
Patent Office

Office européen
des brevets

# EUROPEAN SEARCH REPORT

Application Number

EP 24 18 3425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/325882 A1 (YUSHIN GLEB [US] ET AL) 12 November 2015 (2015-11-12)<br>* abstract; claims 1-24 *<br>* paragraph [0037] - paragraph [0038] *<br>* paragraph [0066] - paragraph [0068] *<br>* paragraph [0064] *<br>* paragraph [0069] *<br>- - - - - | 1,4-6, 9-14 | INV.<br>H01M4/38<br>H01M4/525<br>H01M4/587<br>H01M10/0525<br>H01M10/0567<br>H01M10/0568<br>H01M10/0569 |
| X | US 2017/077503 A1 (ERICKSON MICHAEL [US] ET AL) 16 March 2017 (2017-03-16)<br>* abstract; claims 1-21 *<br>* paragraph [0108] - paragraph [0110] *<br>* paragraph [0111] - paragraph [0112] *<br>* paragraph [0087] - paragraph [0088] *<br>- - - - - | 1,2,4-6, 8-13 | |
| X | US 10 756 382 B2 (SILA NANOTECHNOLOGIES INC [US]; SILA NANOTECHNOLOGIES INC [US] ET AL.) 25 August 2020 (2020-08-25)<br>* abstract; claims 1-20 *<br>* column 22, line 15 - line 28 *<br>* column 22, line 50 - line 65 *<br>* column 24, line 27 - line 46; figures 32A-B,34,35 *<br>- - - - - | 1,4-6,9, 11 | |
| X | JP 2021 163706 A (GS YUASA CORP) 11 October 2021 (2021-10-11)<br>* paragraph [0102] - paragraph [0107] *<br>* abstract; claims 1-7; example 3; table 1 *<br>* paragraph [0073] - paragraph [0079] *<br>- - - - - | 1-11,14 | |

TECHNICAL FIELDS
SEARCHED (IPC)

H01M

The present search report has been drawn up for all claims

| Place of search | Date of completion of the search | Examiner |
|---|---|---|
| The Hague | 18 November 2024 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3425

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2024

| Patent document cited in search report | Publication date | Patent family member(s) | | Publication date |
|---|---|---|---|---|
| US 2015325882 A1 | 12-11-2015 | US | 2015325882 A1 | 12-11-2015 |
| | | US | 2019058220 A1 | 21-02-2019 |
| | | US | 2023023451 A1 | 26-01-2023 |
| US 2017077503 A1 | 16-03-2017 | CN | 106063002 A | 26-10-2016 |
| | | DE | 112015001110 T5 | 01-12-2016 |
| | | GB | 2538446 A | 16-11-2016 |
| | | JP | 2017507460 A | 16-03-2017 |
| | | KR | 20160129855 A | 09-11-2016 |
| | | US | 2017077503 A1 | 16-03-2017 |
| | | WO | 2015134783 A1 | 11-09-2015 |
| US 10756382 B2 | 25-08-2020 | US | 2015236372 A1 | 20-08-2015 |
| | | US | 2020028203 A1 | 23-01-2020 |
| | | US | 2020381766 A1 | 03-12-2020 |
| | | US | 2022311043 A1 | 29-09-2022 |
| | | US | 2024039034 A1 | 01-02-2024 |
| JP 2021163706 A | 11-10-2021 | JP | 7494535 B2 | 04-06-2024 |
| | | JP | 2021163706 A | 11-10-2021 |
| | | JP | 2024109754 A | 14-08-2024 |

EPO FORM P0459

For more details about this annex : see Official Journal of the European Patent Office, No. 12/82